# EUROPÄISCHE PATENTSCHRIFT

(11) **EP 4 455 720 B1**
(45) Veröffentlichungstag und Bekanntmachung des Hinweises auf die Patenterteilung: **17.12.2025**
(21) Anmeldenummer: 24161722.4
(22) Anmeldetag: 06.03.2024
(51) Int. Cl.: G01S 7/4861, G01S 7/4863, G01S 7/4865, G01S 7/497, G01S 17/10

(54) **OPTOELEKTRONISCHER SENSOR MIT LAWINENPHOTODIODENELEMENTEN**
AVALANCHE OPTOELECTRONIC SENSOR WITH PHOTODIODE ELEMENTS
CAPTEUR OPTOÉLECTRONIQUE AVEC ÉLÉMENTS PHOTODIODES À AVALANCHE

(30) Priorität: 25.04.2023 DE 102023110519
(43) Veröffentlichungstag der Anmeldung: 30.10.2024
(73) Patentinhaber: SICK AG, 79183 Waldkirch (DE)
(72) Erfinder: Zwölfer, Ulrich, 79183 Waldkirch (DE); Albert, Michael, 77955 Ettenheim (DE)

(56) Entgegenhaltungen:
- EP-A1- 3 611 535
- US-A1- 2023 009 376

## Beschreibung

Die Erfindung betrifft einen optoelektronischen Sensor mit einer Vielzahl von Lawinenphotodiodenelementen sowie ein Verfahren zum Erfassen von Licht nach dem Oberbegriff von Anspruch 1 beziehungsweise 10.

Ein Lichtempfänger hat die Funktion, aus einfallendem Empfangslicht ein elektrisches Signal zu erzeugen. Die Nachweisempfindlichkeit einfacher Photodioden genügt in vielen Anwendungsfällen nicht. In einer Lawinenphotodiode (APD, Avalanche Photo Diode) löst das einfallende Licht einen kontrollierten Lawinendurchbruch (Avalanche Effect) aus. So werden die von einfallenden Photonen erzeugten Ladungsträger vervielfacht, und es entsteht ein Photostrom, der zu der Lichtempfangsintensität proportional, dabei aber wesentlich größer ist als bei einer einfachen PIN-Diode. Im sogenannten Geiger-Modus ist die Lawinenphotodiode oberhalb der Durchbruchspannung (Breakdown voltage) vorgespannt (Bias), so dass bereits ein einziger, durch ein einzelnes Photon freigesetzter Ladungsträger eine Lawine auslösen kann, die dann aufgrund der hohen Feldstärke sämtliche verfügbaren Ladungsträger rekrutiert. Die Lawinenphotodiode zählt somit, wie der namensgebende Geigerzähler, Einzelereignisse. Lawinenphotodioden im Geiger-Modus werden auch als SPADs (Single-Photon Avalanche Diode) bezeichnet.

Geiger-APDS oder SPADs sind also sehr schnelle, hochempfindliche Photodioden auf Halbleiterbasis. Ein Nachteil der hohen Empfindlichkeit ist, dass nicht nur ein Nutzlichtphoton, sondern auch ein schwaches Störereignis durch Fremdlicht, optisches Übersprechen oder Dunkelrauschen den Lawinendurchbruch auslösen kann. Dieses Störereignis trägt dann mit dem gleichen relativ starken Signal zum Messergebnis bei wie das empfangene Nutzlicht und ist davon auch aus dem Signal heraus nicht unterscheidbar. Anschließend ist die Empfindlichkeit der Lawinenphotodiode für eine Tot- oder Erholungszeit von ca. 5 bis 100 ns drastisch reduziert, so dass sie solange für weitere Messungen praktisch ausfällt. Deshalb ist es üblich, mehrere SPADs statistisch auszuwerten. Ein typischer Silizium-Photomultiplier (SiPM) mit SPADs weist mehrere tausend SPADs auf.

Lichtempfänger mit SPADs eignen sich auch für die Lichtlaufzeitmessung (TOF, Time of Flight) zur Abstandsmessung mit Laserpulsen. Dabei wird beispielsweise ein TDC (Time-to-Digital Converter) zu einem Sendezeitpunkt des Laserpulses gestartet und mit Empfang des Laserpulses nach Reflexion von einem Zielobjekt wieder angehalten. Der Empfangszeitpunkt wird durch Auswertung einer Vielzahl SPADs bestimmt, beispielsweise durch Sammeln der Auslösezeitpunkte der einzelnen SPADs in einem Histogramm.

Dabei wird das Messerereignis durch Störereignisse beeinträchtigt, also Auslösungen von Lawinen, die nicht von Nutzlicht verursacht sind, insbesondere Fremdlicht- oder Dunkelereignisse. Die Besonderheit solcher Störsignalüberlagerungen bei SPADs liegt in dem beschriebenen Totzeiteffekt. Der Pool an für die Messung verfügbaren SPADs reduziert insbesondere unter konstantem Fremdlichteinfall exponentiell (Pileup-Effekt). Damit sind Fremdlichtfestigkeit, Temperaturstabilität und Mehrfachmessungen beeinträchtigt: Der Lichtempfänger ist womöglich in dem Moment, wo das Nutzlicht eintrifft, nahezu blind, weil kaum noch SPADs außerhalb der Totzeit verfügbar bleiben.

Die EP 3 428 683 A1 offenbart einen optoelektronischen Sensor mit einem Lichtempfänger, der eine Vielzahl von SPADs aufweist. Eine Auswahl dieser SPADs wird in einer 1:1-Verbindung mit jeweils einer Lichtlaufzeitmesseinheit verbunden. Dadurch wird ein interessierender Bereich des Lichtempfängers ausgewählt, auf dem die Lichtlaufzeitmessung beruht. Eine Lösung für den Pileup-Effekt bietet das Dokument nicht an.

In der EP 3 611 535 A1 wird ein Lichtempfänger mit einer Vielzahl von SPADs beschrieben, die Gruppen zugeteilt sind. Mit einer Ansteuereinheit wird die Empfindlichkeit der SPADs einer Gruppe jeweils zu einem der Gruppe zugewiesenen Zeitpunkt verändert, wobei den Gruppen unterschiedliche Zeitpunkte zugewiesen sind. Diese Zeitpunkte werden auf verschiedene Weisen festgelegt, aber darunter ist keine dynamische Reaktion auf Fremdlicht. In einer anderen Ausführungsform sind duale SPADs vorgesehen, wobei die vordere SPAD bei Lichteinfall die Empfindlichkeit der hinteren SPAD anpasst. Das ist zwar eine dynamische Umschaltung zwischen aktiven SPADs, sie erfolgt aber rein lokal und damit ohne Wissen über den Fremdlichteinfall. Außerdem wird für die Umschaltungen relativ viel Logik zulasten der lichtempfindlichen Fläche benötigt.

Die DE 10 2014 207 599 A1 offenbart einen Photodetektor mit mehreren Lawinenphotodioden pro Bildpunkt, die reihum zeitversetzt zueinander aktiviert werden. Die einzelne aktive Zeitdauer ist kleiner als die Regenerationszeit, in Summe über die Lawinenphotodioden eines Bildpunktes sind die Zeitdauern aber größer als die Regenerationszeit, so dass ein kontinuierlicher Betrieb ermöglicht wird. Die Umschaltung berücksichtigt aber nicht die aktuelle Fremdlichtsituation. Zwar sind auch Anpassungen der jeweils miteinander aktivierten SPADs sowie der Aktivierungs- und Deaktivierungszeiten vorgesehen. Das bezieht sich aber jeweils auf die Vergangenheit oder den Messpeak.

Die nachveröffentlichte EP 4 397 992 A1 befasst sich mit einem optischen Sensor, der zwei in Reihe geschaltete SPADs aufweist, wobei durch Lichteinfall auf die erste SPAD die zweite SPAD aktiviert wird. Dafür gelten die Nachteile, die oben zu den dualen SPADs gemäß EP 3 611 535 A1 genannt wurden.

Die US 2023/0009376 A1 betrifft eine Lichtlaufzeitmessung mit einer Matrixanordnung von SPADs, die zu einer Vielzahl von Gruppen angeordnet sind. Es wird eine Fremdlichtbelastung anhand der Ereignisse in einer ersten Gruppe bestimmt. Entsprechend wird die Anzahl aktiver SPADs in anderen Gruppen eingestellt, um eine Übersteuerung zu vermeiden.

Es ist daher Aufgabe der Erfindung, die Erfassung eines gattungsgemäßen Lichtempfängers zu verbessern.

Diese Aufgabe wird durch einen optoelektronischen Sensor mit einer Vielzahl von Lawinenphotodiodenelementen sowie ein Verfahren zum Erfassen von Licht nach Anspruch 1 beziehungsweise 10 gelöst. Wird an die Lawinenphotodiodenelemente eine Vorspannung (Biasspannung) oberhalb der Durchbruchspannung angelegt, so arbeiten sie im Geiger-Modus. Die Lawinenphotodiodenelemente werden in dieser Beschreibung immer wieder auch als SPADs, SPAD-Zelle oder kurz Zelle bezeichnet. Aus den Lawinenphotodiodenelementen werden mindestens eine erste Gruppe und eine zweite Gruppe gebildet. Die Gruppen sind vorzugsweise überlappungsfrei, d.h. kein Lawinenphotodiodenelement gehört zu mehr als einer Gruppe, und müssen nicht sämtliche verfügbaren Lawinenphotodiodenelemente abdecken, es kann also gruppenfreie Lawinenphotodiodenelemente geben. Die Lawinenphotodiodenelemente einer Gruppe sind vorzugsweise musterartig über den Lichtempfänger oder einen Teilbereich des Lichtempfängers verteilt.

Eine Ansteuereinheit ist in der Lage, die Gruppen alternierend zu aktivieren oder anders ausgedrückt zwischen den Gruppen umzuschalten. Es ist also abwechselnd die erste und die zweite Gruppe aktiv, womöglich mit zeitlichem Überlapp und/oder einer Phase ohne aktive Gruppe dazwischen. Im Falle mehrerer Gruppen folgt die Umschaltung vorzugsweise einem rollierenden Schema. Die Lawinenphotodiodenelemente der jeweils aktiven Gruppe reagieren auf Lichteinfall durch Auslösen einer Lawine und eines entsprechenden Signals, beispielsweise Photostroms, und gehen danach in die einleitend erläuterte Totzeit. Die Lawinenphotodiodenelemente einer inaktiven Gruppe lösen keine Lawinen aus, und zwar vorzugsweise weder durch Lichteinfall noch durch andere Ursachen wie Dunkelstrom, und sie befinden sich folglich nicht in der Totzeit.

Die Erfindung geht von dem Grundgedanken aus, die Umschaltung dynamisch an den Lichteinfall zu koppeln. Dafür ist eine Pegelmesseinheit vorgesehen, die den Lichteinfall auf die jeweilige aktive Gruppe bewertet und daraus einen Umschaltzeitpunkt ableitet. Es gibt damit keine festen Intervalle oder Zeitpunkte, nach oder zu denen umgeschaltet wird, dies entscheidet sich erst während der Messung anhand des gemessenen Lichteinfalls. Es handelt sich um eine Gesamtbeurteilung des Lichteinfalls, keine individuelle Entscheidung von Lawinenphotodiodenelemente wie im Falle der dualen SPADs gemäß EP 3 611 535 A1 oder der in Serie geschalteten SPADs gemäß der einleitend genannten noch unveröffentlichten europäischen Patentanmeldung mit dem Aktenzeichen 23150189.1.

Die Erfindung hat den Vorteil, dass eine hohe Flexibilität und Anpassbarkeit an Messanforderungen erreicht wird. Die Robustheit gegenüber Fremdlicht ist erheblich erhöht, und es kann dynamisch auf den herrschenden Fremdlichtpegel reagiert werden. Dabei entstehen keine zusätzlichen Leistungsverluste, im Gegenteil wird die Verlustleistung durch Vermeidung von Dunkelereignissen in jeweils inaktiven Gruppen geringer. Ein optisches Übersprechen zwischen den alternierend aktiven Gruppen ist vermieden. Der Lichtempfänger kommt mit einer einfachen Logik aus, bietet damit einen großen Anteil einer lichtempfindlichen Fläche und bleibt kostengünstig und kompakt.

Die Ansteuereinheit ist bevorzugt dafür ausgebildet, Lawinenphotodiodenelemente durch Erhöhen der Vorspannung über die Durchbruchspannung zu aktivieren und/oder durch Absenken der Vorspannung unter die Durchbruchspannung zu deaktivieren. Das entspricht einem Wechsel zwischen einem linearen Modus und einem Geiger-Modus und ist eine besonders einfache Form der Umschaltung, die sich Eigenschaften der Lawinenphotodiodenelemente zunutze macht. Zwischen den beiden Modi liegt ein Faktor 10⁵-10⁶ in der Empfindlichkeit, was effektiv ein Aktivieren und Deaktivieren ist.

Die Pegelmesseinheit weist einen Zähler auf, mit dem eine Anzahl derjenigen Lawinenphotodiodenelemente der aktiven Gruppe gezählt wird, die einen Lichteinfall registrieren. Ein Lawinenphotodiodenelement, das einen Lichteinfall registriert, löst eine Lawine oder ein Ereignis und ein entsprechendes Signal wie einen Photostrom aus. Der Zähler zählt somit über die jeweils aktive Gruppe Ereignisse oder Zellen, in denen ein Ereignis ausgelöst wurde. Diese Anzahl wird der Bewertung des Lichteinfalls zugrunde gelegt. Ein solcher Zähler stellt eine besonders einfache Logik dar, die jedoch die benötigten Zwecke voll erfüllt.

Die Pegelmesseinheit ist bevorzugt dafür ausgebildet, den Umschaltzeitpunkt auf den Zeitpunkt festzulegen, an dem die Anzahl eine Grenzanzahl erreicht. Die Grenzanzahl ausgelöster Zellen stellt eine Schwelle dar. Der Fall, dass die Grenzanzahl erreicht wird, schließt deren Überschreiten mit ein. Außerdem kann das Zählen von Ereignissen ebenso invers als Gesamtzahl der Gruppe minus ausgelöste Zellen aufgefasst werden, so dass also statt der ausgelösten die noch verfügbaren Zellen gezählt werden, wo dann der Umschaltzeitpunkt am Erreichen oder Unterschreiten der Grenzanzahl festgemacht ist. Als Grenzanzahl kann auch ein Prozentsatz angegeben werden. Das sind alles durch triviale Umrechnungen erzeugte Varianten desselben Kriteriums. Zwischen dem Erreichen der Grenzanzahl und der tatsächlichen Umschaltung kann es noch einen zeitlichen Versatz geben, der zum Teil unvermeidlichen Verarbeitungszeiten geschuldet ist, aber auch absichtlich erhöht sein kann.

Die Pegelmesseinheit ist bevorzugt dafür ausgebildet, den Zähler nach einer Regenerationszeit zurückzusetzen oder mit einer aus der Regenerationszeit abgeleiteten Abklingkonstante zurückzuzählen. Der Zähler berücksichtigt damit nur ein begrenztes Zeitintervall, entweder indem der Zähler nach der Regenerationszeit ganz neu zu zählen beginnt, oder indem alte Ereignisse wieder aus dem Zählerstand herausfallen. Dieses Herunterzählen wiederum kann über einen festen Wert oder einen Prozentsatz erfolgen. Ohne Zurücksetzen oder Zurückzählen erfolgt eine Umschaltung womöglich grundlos, weil sich die vor längerer Zeit gezählten ausgelösten Zellen bereits erholt haben. Andererseits wäre eine solche Umschaltung auch weitgehend unproblematisch, da sie lediglich dazu führt, dass ein noch messfähiger Pool von Zellen durch einen anderen ebenfalls messfähigen Pool ersetzt wird. Die Regenerationszeit ist vorzugsweise ein Bruchteil einer Totzeit der Lawinenphotodiodenelemente oder ein Bruchteil einer Messperiode, wobei eine Messperiode insbesondere der doppelten Lichtlaufzeit bis zu einer vorgegebenen Reichweite entspricht.

Die Ansteuereinheit ist bevorzugt dafür ausgebildet, für einen zeitlichen Überlapp die bisherige aktive Gruppe verzögert inaktiv zu schalten, wenn die andere Gruppe bereits aktiv geschaltet ist. Dadurch kann insbesondere die bisher aktive Gruppe noch messen, bis die neu aktiv geschaltete Gruppe einschließlich aller internen Verzögerungen messbereit ist.

Die Ansteuereinheit ist bevorzugt dafür ausgebildet, wahlweise zwischen einem Umschaltmodus, in dem das Umschalten zwischen aktiven und inaktiven Gruppen erfolgt, und einem Dauermodus zu wechseln, in dem kein Umschalten zwischen aktiven und inaktiven Gruppen erfolgt. Die erfindungsgemäße dynamische Umschaltung wird damit zu einer wählbaren Funktion, die auch ausgeschaltet werden kann. Grundsätzlich ist der Lichtempfänger etwas genauer, wenn keine Gruppen gebildet werden, da dann zu jedem Zeitpunkt mehr Zellen zu einer Messung beitragen können. Das erfindungsgemäße Umschalten wird dann beispielsweise erst im Falle schwacher Nutzsignale benötigt, etwa für eine hohe Reichweite, beziehungsweise wenn eine besondere Fremdlichtbelastung erwartet oder gemessen wird.

Der Lichtempfänger weist bevorzugt eine ROI-Auswahleinheit auf, die dafür ausgebildet ist, einen Teil der Lawinenphotodiodenelemente auszuwählen und nur deren Ausgangssignale weiterzuverarbeiten, wobei die Gruppen innerhalb der ausgewählten Lawinenphotodiodenelemente gebildet sind. Die Auswahl eines interessierenden Bereichs (ROI, Region of Interest) wird beispielsweise in der einleitend genannten EP 3 428 683 A1 beschrieben. Die Gruppen werden nun nur innerhalb des interessierenden Bereichs gebildet. Damit sind auch zugehörige Größen und Begriffe wie Ereignisse, Zählerstand und Zahl verfügbarer Zellen in der aktiven Gruppe auf den interessierenden Bereich bezogen. Die erfindungsgemäße dynamische Umschaltung sorgt dafür, dass der interessierende Bereich trotz der Totzeiten beziehungsweise des Pileup-Effekts unter Fremdlicht messfähig bleibt.

Vorzugsweise ist eine Lichtlaufzeitmesseinheit vorgesehen, die dafür ausgebildet ist, aus den Signalen der Lawinenphotodiodenelemente eine Lichtlaufzeit eines Lichtpulses zu bestimmen. Vorzugsweise wird dazu ein aus den Signalen abgeleiteter Empfangszeitpunkt mit einem optisch oder elektrisch gewonnenen Referenzzeitpunkt der Aussendung des Lichtpulses verglichen, beispielsweise mittels TDCs. Da in einem einzelnen Lawinenphotodiodenelement im Geiger-Modus ein Messereignis und ein Störereignis nicht unterscheidbar sind, werden bevorzugt statistische Verfahren über eine Vielzahl von Lawinenphotodiodenelementen beziehungsweise Messwiederholungen eingesetzt, beispielsweise der Empfangszeitpunkt aus einem Peak in einem Histogramm mit individuellen Ereignissen der Lawinenphotodiodenelemente bestimmt.

Die Lawinenphotodiodenelemente bilden vorzugsweise eine Matrixanordnung, wobei in einer Unterteilung der Matrixanordnung in ein Raster aus Rasterelementen jede Gruppe mindestens ein Lawinenphotodiodenelement in jedem Rasterelement aufweist. Dabei wird eine Matrixanordnung von n x m Lawinenphotodioden in ein Raster aus einer Vielzahl von Rasterelementen mit i x j Lawinenphotodioden unterteilt. In jedem Rasterelement befindet sich zumindest eine Lawinenphotodiode aus jeder Gruppe. Damit ergibt sich eine über den nun ortsauflösend eingesetzten Lichtempfänger vergleichbare Empfindlichkeit.

Die Lawinenphotodiodenelemente zweier Gruppen bilden bevorzugt ein Schachbrettmuster. Dabei sind verschiedene Körnungen denkbar, in denen jeweils Bereiche mit k Lawinenphotodioden zum selben Musterelement des Schachbretts gehören. Das Schachbrettmuster liegt insbesondere in einem interessierenden Bereich.

In vorteilhafter Weiterbildung ist ein optoelektronischer Sensor mit mindestens einem erfindungsgemäßen Lichtempfänger vorgesehen, wobei der Sensor beispielsweise zur Objekterfassung, Entfernungsmessung, als Codeleser und/oder zur Datenübertragung ausgebildet ist. Der Sensor ist besonders bevorzugt ein entfernungsmessender Sensor mit einem Lichtsender zum Aussenden eines Lichtsignals und mit einer Lichtlaufzeitmesseinheit, die dafür ausgebildet ist, aus einer Lichtlaufzeit zwischen Aussenden des Lichtsignals und Empfangen des von dem Objekt aus dem Überwachungsbereich remittierten Lichtsignals einen Abstand des Objekts zu bestimmen. Das Lichtsignal weist bevorzugt einen Lichtpuls auf, und der Sensor misst Entfernungen nach dem Pulsverfahren (dTOF, direct time of flight). Dabei sind auch kompliziertere Formen wie Doppelpulse oder sogar Pulscodes denkbar. Es können auch mehrere Lichtpulse nacheinander ausgesandt, empfangen und die jeweiligen Einzelergebnisse gemeinsam statistisch ausgewertet werden, etwa in einem Pulsmittelungsverfahren und insbesondere mit Hilfe eines Histogramms. Das Lichtlaufzeitverfahren kann in einem eindimensionalen Entfernungstaster, einem Laserscanner oder einem Bildsensor einer 3D-Kamera nach dem Lichtlaufzeitprinzip genutzt werden.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Darstellung eines optoelektronischen Sensors mit einem Lichtempfänger mit einer Vielzahl von Lawinenphotodiodenelementen im Geiger-Modus;
- Fig. 2: eine schematische Ansicht eines Lichtempfängers mit einem interessierenden Bereich und darin gebildeten Gruppen von Lawinenphotodiodenelementen;
- Fig. 3: eine Darstellung eines beispielhaften Zeitverlaufs der je Gruppe noch verfügbaren Lawinenphotodiodenelemente bei Fremdlichteinfall; und
- Fig. 4: eine Darstellung einer Verkettungslogik von Lawinenphotodiodenelementen, bei denen Lichteinfall auf ein jeweils in der Kette früheres Lawinenphotodiodenelement das nächste Lawinenphotodiodenelement in der Kette aktiviert.

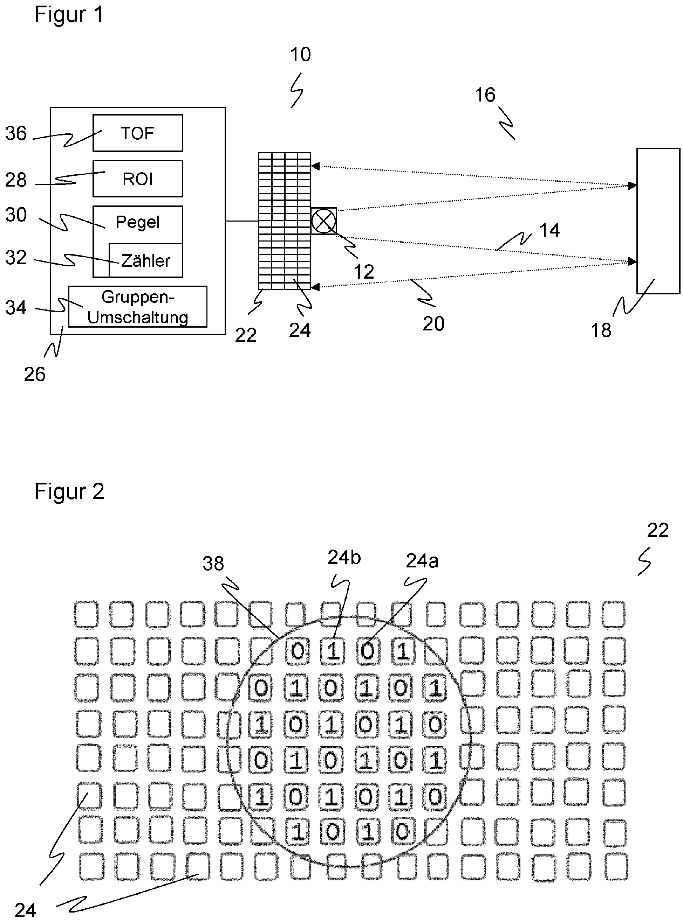

Figur 1 zeigt eine schematische Darstellung eines optoelektronischen Sensors 10 in einer beispielhaften Ausführungsform als einstrahliger Lichttaster. Ein Lichtsender 12, beispielsweise eine LED oder eine Laserlichtquelle, sendet ein Lichtsignal 14 in einen Überwachungsbereich 16 aus. Trifft es dort auf ein Objekt 18, so wird ein Teil des Lichtsignals remittiert oder reflektiert und kehrt als remittiertes Lichtsignal 20 zu einem Lichtempfänger 22 zurück. Dieser Lichtempfänger 22 umfasst eine Vielzahl von Lawinenphotodiodenelementen 24 im Geiger-Modus oder SPADs. Die Empfangssignale der Lawinenphotodiodenelemente 24 werden von einer Steuer- und Auswertungseinheit 26 ausgelesen und dort ausgewertet.

In der Darstellung werden nur ganz schematisch und auf rein funktionaler Ebene einige Blöcke der Steuer- und Auswertungseinheit 26 hervorgehoben, nämlich eine ROI-Auswahleinheit 28, eine Pegelmesseinheit 30 vorzugsweise mit einem Zähler 32, eine Ansteuereinheit 34 und eine Lichtlaufzeitmesseinheit 36. Die ROI-Auswahleinheit 28 ist in der Lage, bestimmte Lawinenphotodiodenelemente 24 auszuwählen und beispielsweise mit der Lichtlaufzeitmesseinheit 36 zu verbinden, beispielsweise mit TDCs und insbesondere in einer 1:1-Verbindung, wie dies beispielsweise in der einleitend genannten EP 3 428 683 A1 beschrieben wird. Die Pegelmesseinheit 30 gewinnt ein Maß über den Lichteinfall insbesondere innerhalb eines interessierenden Bereichs der ROI-Auswahleinheit 28 und bevorzugt speziell für noch zu erläuternde Gruppen, in denen Lawinenphotodiodenelemente 24 zusammengefasst werden. Die Ansteuereinheit 34 kann solche Gruppen aktivieren oder deaktivieren, indem die der betroffenen Gruppe zugehörigen Lawinenphotodiodenelemente 24 aktiviert oder deaktiviert werden, beispielsweise durch Heraufsetzen der Vorspannung über beziehungsweise Herabsetzen unter eine Durchbruchspannung und somit Betreiben in einem Geiger-Modus oder einem linearen Modus. Die Lichtlaufzeitmesseinheit 36 misst eine Lichtlaufzeit vom Aussenden des Lichtsignals 14 bis zum Empfang des remittierten Lichtsignals 20 und rechnet dies über die Lichtgeschwindigkeit in einen Abstand um. Die Lichtlaufzeitmesseinheit 36 ist nicht vorhanden, wenn der Sensor 10 eine andere Aufgabe hat als eine Abstandsbestimmung mit einem Lichtlaufzeitverfahren. Für die Speicherung der Ereignisse zur weiteren Verarbeitung, beispielsweise der Lichtlaufzeitmessung, sollte vorzugsweise zur Beherrschung der Bandbreite für ein geeignetes Pipelining gesorgt werden.

Der Sensor 10 weist in einer praktischen Ausführungsform weitere Elemente auf, insbesondere Sende- und Empfangsoptiken und Anschlüsse, auf die hier vereinfachend nicht eingegangen wird. Die Auftrennung in Lichtempfänger 22 und Steuer- und Auswertungseinheit 26 in Figur 1 ist auch in der Praxis denkbar, dient aber in erster Linie der Erläuterung. Vorzugsweise werden diese Elemente zumindest teilweise auf einem gemeinsamen Chip integriert, dessen Fläche sich lichtempfindliche Bereiche der Lawinenphotodiodenelemente 24 und einzelnen oder Gruppen von Lawinenphotodiodenelementen 24 zugeordnete Schaltkreise zu deren Auswertung und Ansteuerung teilen.

Außerdem ist die optische Anordnung mit einem Lichtsender 12, der einen kleinen Anteil des Lichtempfängers 22 verdeckt, rein beispielhaft. Alternativ sind auch andere bekannte optische Lösungen einsetzbar, wie Autokollimation etwa mit einem Strahlteiler und einer gemeinsamen Optik, oder Pupillenteilung, wo zwei getrennte Optiken vorgesehen sind und Lichtsender und Lichtempfänger nebeneinander angeordnet werden.

Auch der dargestellte einstrahlige Sensor 10 insgesamt ist nur als Beispiel zu verstehen. Eine Erweiterung des Überwachungsbereichs 16 ist durch Bewegen des Strahls in einem Laserscanner möglich, sei es durch einen Drehspiegel oder einen insgesamt drehenden Messkopf mit Lichtsender 12 und/oder Lichtempfänger 22. So können mehrere einstrahlige Systeme kombiniert werden, um ein Lichtgitter mit mehreren, meist parallelen Strahlen zu bilden, welches insbesondere als tastendes Lichtgitter in jedem Strahl Entfernungen misst oder überwacht. Es kann mit den Lawinenphotodiodenelementen 24 einzeln oder gruppenweise ortsaufgelöst gemessen werden, so dass eine 3D-Kamera entsteht. Auch mobile Systeme sind denkbar, bei denen der Sensor 10 beweglich montiert ist.

Figur 2 zeigt eine schematische Ansicht eines Lichtempfängers 22 mit dessen Lawinenphotodiodenelementen 24. Die weitere Erläuterung bezieht sich auf einen interessierenden Bereich 38, den die ROI-Auswahleinheit 28 ausgewählt hat. Darin oder in einer Alternative ohne interessierenden Bereich 38 über den ganzen Lichtempfänger oder sonstige Teilbereiche davon sind zwei Gruppen von Lawinenphotodiodenelementen 24a-b gebildet. Das Schachbrettmuster sowie die Anzahl von zwei Gruppen sind beispielhaft zu verstehen, es können andere Muster und/oder mehr Gruppen vorgesehen sein. Die Gruppenzugehörigkeit ist zumindest der Pegelmesseinheit 30 und der Ansteuereinheit 34 bekannt beziehungsweise von dort vorgegeben.

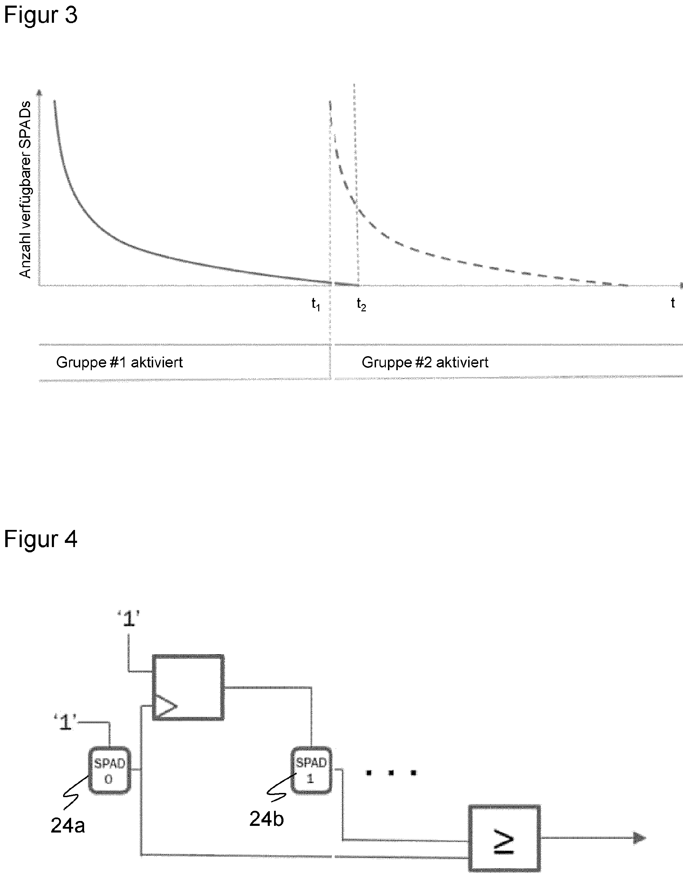

Zu einem herausgegriffenen betrachteten Messzeitpunkt ist jeweils eine Gruppe aktiv, deren Lawinenphotodiodenelemente 24a-b somit bei Lichteinfall eine Lawine oder ein Ereignis auslösen. Die andere Gruppe ist inaktiv. Es ist ein unter Bezugnahme auf Figur 3 noch zu erläuternder zeitlicher Überlapp ebenso denkbar wie eine Phase mit nur inaktiven Gruppen. Die Pegelmesseinheit 30 bewertet den Lichteinfall auf die Lawinenphotodiodenelemente 24a-b der aktiven Gruppe. Dazu werden beispielsweise mit dem Zähler 32 Ereignisse beziehungsweise ausgelöste Lawinen in den Lawinenphotodiodenelementen 24a-b der Gruppe gezählt. Je mehr (Fremd)licht auf den Lichtempfänger 22 fällt, umso mehr Lawinenphotodiodenelemente lösen aus, und umso höher wird der Zählerstand. Der Zähler kann als einfacher Binärzähler implementiert sein. Die Pegelmesseinheit 30 vergleicht die Anzahl gemäß Zählerstand mit einer programmierbaren Grenzanzahl, bei deren Erreichen die Ansteuereinheit 34 auf eine andere Gruppe umschaltet, also bei aktiver erster Gruppe nun stattdessen die zweite Gruppe aktiviert und umgekehrt. Im Fall von mehr als zwei Gruppen erfolgt eine Umschaltung über die mehreren Gruppen hinweg beispielsweise rollierend nach dem Schema 1, 2, ..., n, 1, ... Die Grenzanzahl wird vorzugsweise aus der Größe der Gruppe beziehungsweise der Größe des interessierenden Bereichs 38 abgeleitet, beispielsweise über eine Prozentzahl ausgelöster beziehungsweise invers formuliert noch verfügbarer Lawinenphotodiodenelemente 24a-b.

Das Umschalten zwischen Gruppen kann eine Wahlfunktion des Lichtempfängers 22 sein. Beispielsweise wird die Umschaltung nur in kritischen Fremdlichtsituationen oder für die Messung einer hohen Entfernung eingeschaltet und ansonsten abgeschaltet.

Figur 3 zeigt eine Darstellung eines beispielhaften Zeitverlaufs der je Gruppe noch verfügbaren Lawinenphotodiodenelemente 24a-b bei Fremdlichteinfall. Der Verlauf zeigt den typischen exponentiellen Abfall des Pileup-Effekts. Zu einem Umschaltzeitpunkt t₁ sind nur noch sehr wenige Lawinenphotodiodenelemente 24a der zunächst aktiven ersten Gruppe nicht ausgelöst und verfügbar, und es wird deshalb auf die zweite Gruppe umgeschaltet. In der Figur 2 beginnt damit ein gestrichelt gezeigter zweiter exponentieller Abfall nun der verfügbaren Lawinenphotodiodenelemente 24b der zweiten Gruppe. Der Umschaltzeitpunkt t₂ wird beispielsweise mittels Zähler 32 und der soeben diskutierten entsprechenden Grenzanzahl festgestellt. Die Grenzanzahl ist rein beispielhaft, es können mehr noch verfügbare Lawinenphotodiodenelemente 24a gefordert werden, dann läge der Zeitpunkt t₁ entsprechend weiter links. Wegen des statistischen Schaltverhaltens der Lawinenphotodiodenelemente 24 ist es sinnvoll, den Zeitpunkt t₂ der Inaktivierung der ersten Gruppe etwas zu verzögern, so dass die erste Gruppe mit den restlichen noch verfügbaren Lawinenphotodiodenelementen 24a in der Übergangsphase noch Lichteinfall registriert. Der Überlapp kann im Zusammenspiel mit der Grenzanzahl je nach Anwendung parametriert werden. Im Zeitbereich rechts der Figur 2 haben sich die Lawinenphotodiodenelemente 24a der ersten Gruppe zumindest teilweise und vorzugsweise vollständig erholt, so dass in analoger Weise darauf zurückgeschaltet werden kann.

Figur 4 zeigt eine Darstellung einer Verkettungslogik von Lawinenphotodiodenelementen 24a-b, bei denen Lichteinfall auf ein jeweils in der Kette früheres Lawinenphotodiodenelement 24a das nächste Lawinenphotodiodenelement 24b in der Kette aktiviert. Diese nicht erfindungsgemäße Alternative bewertet keinen Pegel des Lichteinfalls auf eine Gruppe, denn die Auslösungen in der Kette hängen nur von der Kette und keiner Gruppe ab, und weist insbesondere keinen Zähler 32 auf. Die Kette kann sich über eine größere Anzahl von Lawinenphotodiodenelemente erstrecken. Sie bedarf aber einer Logik je Kette, während die Pegelmesseinheit 30 und die Ansteuereinheit 34 vorzugsweise insgesamt nur je einmal vorhanden sind.

## Patentansprüche

1. Lichtempfänger (22) mit einer Vielzahl von Lawinenphotodiodenelementen (24), die jeweils mit einer Vorspannung oberhalb einer Durchbruchspannung vorspannbar und somit in einem Geiger-Modus betreibbar sind, wobei die Lawinenphotodiodenelemente (24) mindestens eine erste Gruppe und eine zweite Gruppe bilden, mit einer Ansteuereinheit (34), die dafür ausgebildet ist, jeweils alternierend eine Gruppe zu aktivieren, indem die Lawinenphotodiodenelemente (24a-b) der Gruppen aktiv oder inaktiv geschaltet werden, und mit einer Pegelmesseinheit (30), die dafür ausgebildet ist, den Lichteinfall auf die jeweilige aktive Gruppe zu bewerten, um daraus einen Umschaltzeitpunkt abzuleiten, zu dem die Ansteuereinheit (34) eine andere Gruppe aktiv schaltet, wobei die Pegelmesseinheit (30) einen Zähler (32) aufweist, mit dem eine Anzahl derjenigen Lawinenphotodiodenelemente (24) der aktiven Gruppe gezählt wird, die einen Lichteinfall registrieren.

2. Lichtempfänger (22) nach Anspruch 1,
wobei die Ansteuereinheit (34) dafür ausgebildet ist, Lawinenphotodiodenelemente (24) durch Erhöhen der Vorspannung über die Durchbruchspannung zu aktivieren und/oder durch Absenken der Vorspannung unter die Durchbruchspannung zu deaktivieren.

3. Lichtempfänger (22) nach einem der vorhergehenden Ansprüche,
wobei die Pegelmesseinheit (30) dafür ausgebildet ist, den Umschaltzeitpunkt auf den Zeitpunkt festzulegen, an dem die Anzahl eine Grenzanzahl erreicht.

4. Lichtempfänger (22) nach einem der vorhergehenden Ansprüche,
wobei die Pegelmesseinheit (30) dafür ausgebildet ist, den Zähler (32) nach einer Regenerationszeit zurückzusetzen oder mit einer aus der Regenerationszeit abgeleiteten Abklingkonstante zurückzuzählen, wobei insbesondere die Regenerationszeit ein Bruchteil einer Totzeit der Lawinenphotodiodenelemente (32) oder ein Bruchteil einer Messperiode ist.

5. Lichtempfänger (22) nach einem der vorhergehenden Ansprüche,
wobei die Ansteuereinheit (34) dafür ausgebildet ist, für einen zeitlichen Überlapp die bisherige aktive Gruppe verzögert inaktiv zu schalten, wenn die andere Gruppe bereits aktiv geschaltet ist.

6. Lichtempfänger (22) nach einem der vorhergehenden Ansprüche,
wobei die Ansteuereinheit (34) dafür ausgebildet ist, wahlweise zwischen einem Umschaltmodus, in dem das Umschalten zwischen aktiven und inaktiven Gruppen erfolgt, und einem Dauermodus zu wechseln, in dem kein Umschalten zwischen aktiven und inaktiven Gruppen erfolgt.

7. Lichtempfänger (22) nach einem der vorhergehenden Ansprüche,
der eine ROI-Auswahleinheit (28) aufweist, die dafür ausgebildet ist, einen Teil (38) der Lawinenphotodiodenelemente (24) auszuwählen und nur deren Ausgangssignale weiterzuverarbeiten, wobei die Gruppen innerhalb der ausgewählten Lawinenphotodiodenelemente (24) gebildet sind.

8. Lichtempfänger (22) nach einem der vorhergehenden Ansprüche,
wobei eine Lichtlaufzeitmesseinheit (36) vorgesehen ist, die dafür ausgebildet ist, aus den Signalen der Lawinenphotodiodenelemente (24) eine Lichtlaufzeit eines Lichtpulses zu bestimmen.

9. Optoelektronischer Sensor (10) mit mindestens einem Lichtempfänger (22) nach einem der vorhergehenden Ansprüche, wobei der Sensor (10) insbesondere ein entfernungsmessender Sensor mit einem Lichtsender (12) zum Aussenden eines Lichtsignals (14) und mit einer Lichtlaufzeitmesseinheit (36) ist, die dafür ausgebildet ist, aus einer Lichtlaufzeit zwischen Aussenden des Lichtsignals (14) und Empfangen des von einem Objekt (18) aus einem Überwachungsbereich (16) remittierten Lichtsignals (20) einen Abstand des Objekts (18) zu bestimmen.

10. Verfahren zum Erfassen von Licht mit einer Vielzahl von Lawinenphotodiodenelementen (24), die jeweils zumindest phasenweise mit einer Vorspannung oberhalb einer Durchbruchspannung vorgespannt und somit in einem Geiger-Modus betrieben werden, wobei die Lawinenphotodiodenelemente (24) mindestens eine erste Gruppe und eine zweite Gruppe bilden und jeweils alternierend eine Gruppe aktiviert wird, indem die Lawinenphotodiodenelemente (24a-b) der Gruppen aktiv oder inaktiv geschaltet werden, wobei der Lichteinfall oder der Pegel des Lichteinfalls auf die jeweilige aktive Gruppe bewertet wird, um daraus einen Umschaltzeitpunkt abzuleiten, zu dem eine andere Gruppe aktiv geschaltet wird, wobei für diese Bewertung ein Zähler (32) eine Anzahl derjenigen Lawinenphotodiodenelemente (24) der aktiven Gruppe zählt, die einen Lichteinfall registrieren.

## Claims

1. A light receiver (22) having a plurality of avalanche photodiode elements (24), which are each biased by a bias above a breakdown voltage and which can thus be operated in a Geiger mode, wherein the avalanche photodiode elements (24) form at least a first group and a second group, having a control unit (34), which is configured to activate one group in an alternating manner in each case by switching the avalanche photodiode elements (24a-b) of the groups to active or inactive, and having a level measurement unit (30) which is configured to evaluate the light incidence on the respective active group in order, from this, to derive a switchover time at which the control unit (34) switches another group to active, wherein the level measurement unit (30) has a counter (32) with which a number of those avalanche photodiode elements (24) of the active group that register a light incidence is counted.

2. A light receiver (22) according to claim 1,
wherein the control unit (34) is configured to activate avalanche photodiode elements (24) by increasing the bias voltage above the breakdown voltage and/or to deactivate them by lowering the bias voltage below the breakdown voltage.

3. A light receiver (22) according to one of the preceding claims,
wherein the level measurement unit (30) is configured to set the switchover time to the point in time at which the number reaches a limit number.

4. A light receiver (22) according to any one of the preceding claims,
wherein the level measurement unit (30) is configured to reset the counter (32) after a regeneration time or to count back with a decay constant derived from the regeneration time, wherein in particular the regeneration time is a fraction of a dead time of the avalanche photodiode elements (32) or a fraction of a measurement period.

5. A light receiver (22) according to any one of the preceding claims,
wherein the control unit (34) is configured, for a time overlap, to switch the previously active group to inactive with a delay if the other group is already switched to active.

6. A light receiver (22) according to any one of the preceding claims,
wherein the control unit (34) is configured to selectively switch between a switching mode, in which the switching between active and inactive groups takes place, and a continuous mode in which no switching between active and inactive groups takes place.

7. A light receiver (22) according to any one of the preceding claims,
comprising an ROI selection unit (28) which is configured to select a portion (38) of the avalanche photodiode elements (24) and to only further process their output signals, wherein the groups are formed within the selected avalanche photodiode elements (24).

8. A light receiver (22) according to any one of the preceding claims,
wherein a time-of-flight measurement unit (36) is provided that is configured to determine a time of flight of a light pulse from the signals of the avalanche photodiode elements (24).

9. An optoelectronic sensor (10) comprising at least one light receiver (22) according to any one of the preceding claims, wherein the sensor (10) is in particular a distance-measuring sensor having a light transmitter (12) for transmitting a light signal (14) and having a time-of-flight measurement unit (36) which is configured to determine a distance of the object (18) from a time of flight between the transmission of the light signal (14) and the reception of the light signal (20) remitted by an object (18) from a monitored zone (16).

10. A method for detecting light using a plurality of avalanche photodiode elements (24), which are each biased at least in phases by a bias above a breakdown voltage and which are thus operated in a Geiger mode, wherein the avalanche photodiode elements (24) form at least a first group and a second group and one group is activated in an alternating manner in each case by switching the avalanche photodiode elements (24a-b) of the groups to active or inactive, wherein the light incidence or the level of the light incidence on the respective active group is evaluated in order, from this, to derive a switchover time at which another group is switched to active, wherein, for this evaluation, a counter (32) counts a number of those avalanche photodiode elements (24) of the active group that register a light incidence.

## Revendications

1. Récepteur de lumière (22) comprenant une pluralité d'éléments photodiodes à avalanche (24) qui peuvent chacun être polarisés avec une tension de polarisation supérieure à une tension de claquage et qui peuvent ainsi fonctionner en mode Geiger, les éléments photodiodes à avalanche (24) formant au moins un premier groupe et un deuxième groupe, comprenant une unité de commande (34) conçue pour activer en alternance un groupe respectif en commutant les éléments photodiodes à avalanche (24a-b) desdits groupes en mode actif ou inactif, et comprenant une unité de mesure de niveau (30) conçue pour évaluer l'incidence de lumière sur le groupe actif respectif afin d'en déduire un moment de commutation auquel l'unité de commande (34) commute un autre groupe en mode actif, l'unité de mesure de niveau (30) comprenant un compteur (32) qui compte le nombre d'éléments photodiodes à avalanche (24) du groupe actif qui enregistrent une incidence de lumière.

2. Récepteur de lumière (22) selon la revendication 1,
dans lequel l'unité de commande (34) est conçue pour activer des éléments photodiodes à avalanche (24) en augmentant la tension de polarisation au-dessus de la tension de claquage et/ou pour les désactiver en abaissant la tension de polarisation en dessous de la tension de claquage.

3. Récepteur de lumière (22) selon l'une des revendications précédentes, dans lequel l'unité de mesure de niveau (30) est conçue pour fixer le moment de commutation au moment où le nombre atteint un nombre limite.

4. Récepteur de lumière (22) selon l'une des revendications précédentes,
dans lequel l'unité de mesure de niveau (30) est conçue pour réinitialiser le compteur (32) après un temps de régénération ou pour le décompter avec une constante de décroissance dérivée du temps de régénération, le temps de régénération étant en particulier une fraction d'un temps mort des éléments photodiodes à avalanche (32) ou une fraction d'une période de mesure.

5. Récepteur de lumière (22) selon l'une des revendications précédentes,
dans lequel l'unité de commande (34) est conçue pour commuter en mode inactif le groupe actif jusqu'alors, et ceci avec un retard et pendant un chevauchement temporel, lorsque l'autre groupe est déjà commuté en mode actif.

6. Récepteur de lumière (22) selon l'une des revendications précédentes, dans lequel l'unité de commande (34) est conçue pour passer au choix entre un mode de commutation, dans lequel la commutation entre les groupes actifs et inactifs a lieu, et un mode continu, dans lequel aucune commutation entre les groupes actifs et inactifs n'a lieu.

7. Récepteur de lumière (22) selon l'une des revendications précédentes, comportant une unité de sélection de ROI (28) conçue pour sélectionner une partie (38) des éléments photodiodes à avalanche (24) et pour ne traiter que leurs signaux de sortie, les groupes étant formés au sein des éléments photodiodes à avalanche (24) sélectionnés.

8. Récepteur de lumière (22) selon l'une des revendications précédentes,
dans lequel est prévue une unité de mesure du temps de propagation de lumière (36) conçue pour déterminer le temps de propagation d'une impulsion lumineuse à partir des signaux des éléments photodiodes à avalanche (24).

9. Capteur optoélectronique (10) comprenant au moins un récepteur de lumière (22) selon l'une des revendications précédentes, le capteur (10) étant en particulier un capteur de mesure de distance muni d'un émetteur de lumière (12), destiné à émettre un signal lumineux (14), et d'une unité de mesure du temps de propagation de lumière (36) conçue pour déterminer la distance d'un objet (18) à partir du temps de propagation de lumière entre l'émission du signal lumineux (14) et la réception du signal lumineux (20) renvoyé par l'objet (18) depuis une zone à surveiller (16).

10. Procédé de détection de lumière à l'aide d'une pluralité d'éléments photodiodes à avalanche (24) qui sont chacun polarisés au moins par phases avec une tension de polarisation supérieure à une tension de claquage et qui fonctionnent ainsi en mode Geiger, les éléments photodiodes à avalanche (24) formant au moins un premier groupe et un deuxième groupe, et un groupe respectif étant activé en alternance en commutant les éléments photodiodes à avalanche (24a-b) desdits groupes en mode actif ou inactif, sachant que l'incidence de lumière ou le niveau d'incidence de lumière sur le groupe actif respectif est évalué(e) afin d'en déduire un moment de commutation auquel un autre groupe est commuté en mode actif, et que pour cette évaluation, un compteur (32) compte le nombre d'éléments photodiodes à avalanche (24) du groupe actif qui enregistrent une incidence de lumière.
